# DEMANDE DE BREVET EUROPEEN

(11) **EP 4 810 994 A1**
(43) Date de publication de la demande: **23.09.2026**
(21) Numéro de dépôt: 26166116.9
(22) Date de dépôt: 19.03.2026
(51) Int. Cl.: G01S 13/30, G01S 13/24, G01S 13/28

(54) **PROCÉDÉ DE FONCTIONNEMENT D'UN RADAR DE DÉTECTION DE CIBLES ET RADAR DE DÉTECTION ASSOCIÉ**

(30) Priorité: 20.03.2025 FR 2502859
(71) Demandeur: THALES, 92190 Meudon (FR)
(72) Inventeur: GOY, Philippe, 33700 MERIGNAC (FR); COTTRON, Rodolphe, 33700 MERIGNAC (FR); QUINQUIS, Alexandre, 33700 MERIGNAC (FR)
(74) Mandataire: Lavoix

(57) **Abrégé**

La présente invention concerne un procédé de fonctionnement d'un radar de détection de cibles comprenant la mise en œuvre de plusieurs récurrences d'une étape **(110)** d'émission/réception de signaux comprenant les sous-étapes suivantes :
- génération (111) d'une séquence d'impulsions consécutives comprenant au moins deux impulsions associées à des modes différents ;
- émission (112) des impulsions dans des bandes fréquentielles différentes ;
- réception (113) dans une fenêtre temporelle commune des échos des impulsions ;

lors de N récurrences de l'étape (110), au moins Q1 impulsions relatives à un premier mode étant émises selon des bandes fréquentielles adjacentes ;
le procédé comprenant en outre une étape (120) de prétraitement des échos reçus, comprenant les sous-étapes suivantes :
- compression (125) de Q1 échos correspondant auxdites Q1 impulsions ;
- reconstruction (126) d'une première bande synthétique.

## Description

La présente invention concerne un procédé de fonctionnement d'un radar de détection de cibles.

La présente invention concerne également un radar de détection mettant en œuvre un tel procédé.

Le domaine technique de l'invention concerne les capteurs électromagnétiques ou sonores (exemple : radars / sonar). Le domaine d'exploitation concerne les systèmes embarqués à bord des aéronefs, des bateaux, sous-marins, satellites nécessitant une détection/identification de cibles dans du fouillis de mer, en particulier pour les applications militaires.

Le problème technique à résoudre est l'optimisation du budget temps radar pour un radar multifonctions (détection, imagerie, calibration, écoute, etc.). Actuellement, les radars travaillent séquentiellement par entrelacement temps long ou temps court, ce qui contraint à réaliser les tâches radar une par une.

Un enjeu des radars de surveillance est le maintien des capacités de détection et d'identification de cibles par l'application de traitements de détection et d'identification adaptés à des environnements de fouillis variés.

Les modes de détection de cibles maritimes sont usuellement construits suivant les étapes suivantes :
- détermination des largeurs d'impulsions Lli ainsi que de la fenêtre de réception Tr, et placement de lobes en site ;
- choix de la bande : compromis entre résolution, capacité de calcul (nombre d'échantillons) et réduction du RCB (rapport clutter, i.e. fouillis, à bruit) moyen pour la détection de cibles ;
- choix de la vitesse de balayage : compromis entre traitement cohérent (donné par les largeurs d'impulsions Lli conditionnellement à une fenêtre de réception Tr et un facteur de forme déjà fixé), traitement non-cohérent (post-intégration pour lisser le speckle et moyenner la SER (de l'anglais « Surface Equivalente Radar » ou « Surface Radar Équivalente » en français) et les capacités d'extraction ;
- choix du nombre de post-intégrations Npi : dernier critère de conception en règle générale, minimum 4 traditionnellement en surveillance maritime, donné par le temps de rafraichissement et, le nombre de position en balayage électronique, ou la taille du theta3dB en balayage mécanique.

La détection et l'identification de cibles maritimes sont généralement réalisées sur le même signal radar, éventuellement échantillonné différemment pour pouvoir rentrer dans la machine de traitement temps réel.

Généralement, un compromis est réalisé pour travailler avec la meilleure résolution distance possible, afin de favoriser l'identification et la détection sur fouillis, conditionnellement à un débit maximal et des capacités de calcul et de mémoire donnés. Pour réduire le débit sur la chaine de détection, deux techniques classiques sont usuellement employées : la décimation en azimut (post-intégration non-glissante) et la décimation en distance (regroupement par le max qui favorise la détection par rapport à une moyenne) réduisant respectivement la résolution latérale et radiale du mode de détection.

Les nouvelles machines de calcul permettent désormais de travailler sur des débits, une mémoire, une charge calculatoire et un nombre d'échantillons toujours plus importants : ces techniques de décimation peuvent être progressivement abandonnées pour travailler au plus proche du signal brut (contenant le maximum d'information).

En termes de capacité de détection, travailler sur le signal brut n'apparait pas comme déterminant pour augmenter les performances de détection des traitements TFAC (« taux de fausse alarme constant ») usuels : on augmente le nombre de cases sous test et potentiellement cela aura un impact sur la probabilité de fausse alarme et donc les seuils de détection risquent d'être relevés pour maintenir un taux de fausse alarme constant.

A contrario, les techniques d'identification fondées sur des techniques de traitement d'images (morphologiques ou réseau de neurones) seront plus efficaces sur un signal contenant une information non-traitée a priori.

Les techniques d'imagerie ISAR (de l'anglais « Inverse Synthetic-Aperture Radar » ou « Radar à Synthèse d'Ouverture Inverse » en français) permettent d'obtenir des images très haute résolution des cibles maritimes à des fins d'identification et classification.

Un inconvénient important des modes d'imagerie maritime est le temps d'illumination important pour pouvoir exploiter l'effet ISAR nécessaire à la résolution transverse de l'image ainsi que le temps et la charge de calcul. En termes d'ordonnancement, les modes de détection sont mis en pause pendant l'acquisition et l'exploitation des données ISAR, ce qui pose un problème d'emploi du système radar.

Ainsi, des techniques d'identification de cibles « à la volée » sont déployées sur le même signal que celui de la chaine détection, même si le pouvoir résolvant est limité par rapport à l'ISAR, afin de pouvoir traiter une grande partie des cibles pendant le mode de détection sans arrêt de ce dernier.

En résumé, les méthodes de l'état de la technique ne permettent pas de mettre en œuvre efficacement au moins deux modes de fonctionnement d'un radar tout en gardant les performances nécessaires de chacun de ces modes.

La présente invention a pour but de résoudre ce problème de l'état de la technique et de proposer donc des moyens permettant de mettre en œuvre efficacement au moins deux modes de fonctionnement d'un radar tout en gardant les performances nécessaires de chacun de ces modes.

À cet effet, l'invention a pour objet un procédé de fonctionnement d'un radar de détection de cibles suivant un premier mode et un deuxième mode, le procédé comprenant la mise en œuvre de plusieurs récurrences d'une étape d'émission/réception de signaux, chaque récurrence de ladite étape comprenant les sous-étapes suivantes :
- génération d'une séquence d'impulsions consécutives comprenant au moins une impulsion associée au premier mode et au moins une impulsion associée au deuxième mode ;
- émission des impulsions dans des bandes fréquentielles différentes ;
- réception dans une fenêtre temporelle commune des échos des impulsions ;

lors de N récurrences de l'étape d'émission/réception, au moins Q1 impulsions relatives au premier mode étant émises selon des bandes fréquentielles adjacentes, le nombre Q1 étant supérieur ou égal à 2, le nombre N étant supérieur ou égal à 1 ;
le procédé comprenant en outre une étape de prétraitement des échos reçus, comprenant les sous-étapes suivantes, mises en œuvre après les N récurrences de l'étape d'émission/réception :
   - compression de Q1 échos correspondant aux Q1 impulsions émises selon lesdites bandes fréquentielles adjacentes ;
   - reconstruction d'une première bande synthétique à partir desdits Q1 échos comprimés.

Suivant d'autres aspects avantageux de l'invention, le procédé comprend une ou plusieurs des caractéristiques suivantes, prises isolément ou suivant toutes les combinaisons techniquement possibles :
- lors de N récurrences de l'étape d'émission/réception, Q2 impulsions relatives au deuxième mode sont émises selon des bandes fréquentielles adjacentes, le nombre Q2 étant supérieur ou égal à 2 ;
- la sous-étape de compression comprenant en outre une compression de Q2 échos correspondant aux Q2 impulsions émises selon lesdites bandes fréquentielles adjacentes ;
- la sous-étape de reconstruction comprenant en outre une reconstruction d'une deuxième bande synthétique à partir desdits Q2 échos comprimés ;
- le nombre N est égal à Q1 et dans lequel la séquence d'impulsions consécutives générée lors de chaque récurrence de l'étape d'émission/réception comprend une seule impulsion associée au premier mode et une seule impulsion associée au deuxième mode ;
- la séquence d'impulsions consécutives générée lors de chaque récurrence de l'étape d'émission/réception comprend une seule impulsion associée au premier mode et plusieurs impulsions associées au deuxième mode ;
- la séquence d'impulsions consécutives générée lors de chaque récurrence de l'étape d'émission/réception comprend au moins deux impulsions associées au premier mode et au moins deux impulsions associées au deuxième mode ;
- les impulsions associées à un même mode ont une même largeur fréquentielle ; les impulsions associées au premier mode ayant une largeur fréquentielle B1 ;
- la largeur de la première bande synthétique est égale à Q1xB1 ;
- la sous-étape de compression de Q1 échos comprend l'application d'un filtre de Wiener ;
- l'un des modes est un mode Doppler et l'autre mode est un mode non-Doppler ;
- l'un des modes est un mode d'imagerie et l'autre mode est un mode de détection/identification de cibles maritimes.
- l'étape de prétraitement définit au moins une voie de traitement séparée pour chaque mode ;
- l'étape de prétraitement définit pour le mode de détection/identification une voie de traitement à basse résolution et une voie de traitement à haute résolution ;
- la sous-étape de reconstruction de la première bande synthétique est mise en œuvre dans la voie de traitement à haute résolution ;
- l'étape de prétraitement comprend en outre une sous-étape d'application d'une fonction de détection et une sous-étape d'application d'une fonction d'identification ; la fonction d'identification étant mise en œuvre dans la voie de traitement à haute résolution, de préférence uniquement dans la voie de traitement à haute résolution ; la fonction de détection étant mise en œuvre dans la voie de traitement à basse résolution, de préférence uniquement dans la voie de traitement à basse résolution.
- le procédé comprenant en outre une étape de combinaison de détections issues des différentes voies de traitement ;
- l'étape de prétraitement comprend en outre une sous-étape de post-intégration de chaque écho reçu, ladite sous-étape étant mise en œuvre dans la voie de traitement à basse résolution.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un radar de détection selon l'invention ;
- [Fig. 2] la figure 2 est un organigramme d'un procédé de fonctionnement du radar de la figure 1 ; et
- [Fig. 3] [Fig. 4] [Fig. 5] les figures 3 à 5 sont différentes vues illustrant la mise en œuvre du procédé de la figure 2.

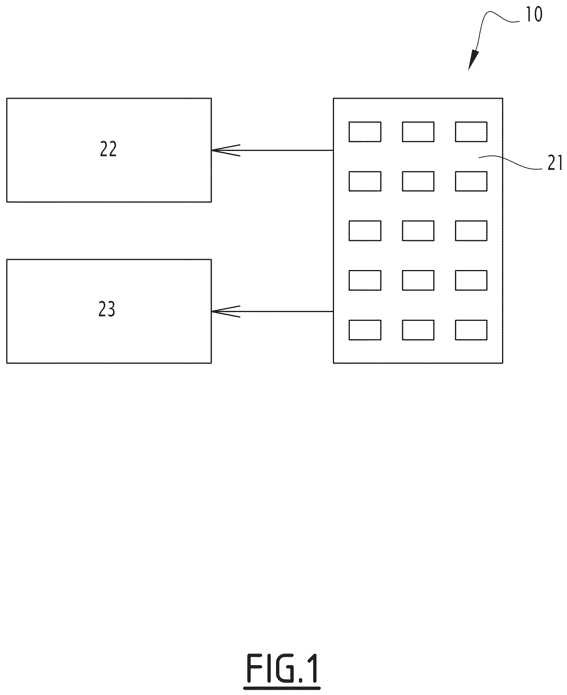

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 est notamment utilisable en surveillance maritime suivant plusieurs modes de fonctionnement. En particulier, le radar 10 est notamment utilisable suivant un premier mode et suivant un deuxième mode différent du premier mode. Avantageusement, le premier mode est un mode de détection/identification de cibles maritimes et le deuxième mode est un mode d'imagerie, par exemple de type ISAR. Ainsi, le radar 10 est un radar multifonctions.

De manière connue en soi, le mode de détection /identification permet de mettre en œuvre une fonction de détection et une fonction d'identification. La fonction de détection permet de détecter une cible sur une surface maritime. La fonction d'identification permet de différencier et ranger les cibles détectés suivant certains critères (taille, SER, etc.) définissant des classes. S'ensuit une fonction de pistage de cibles qui permet de suivre les cibles lors de son déplacement, par exemple sur la surface maritime.

Dans la suite de la description, il sera considéré par ailleurs que le mode de détection/identification est un mode non-Doppler et que le mode d'imagerie est un mode Doppler. L'invention reste toutefois applicable à une situation inverse ou lorsque les deux modes forment simultanément des modes Doppler ou des modes non-Doppler.

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

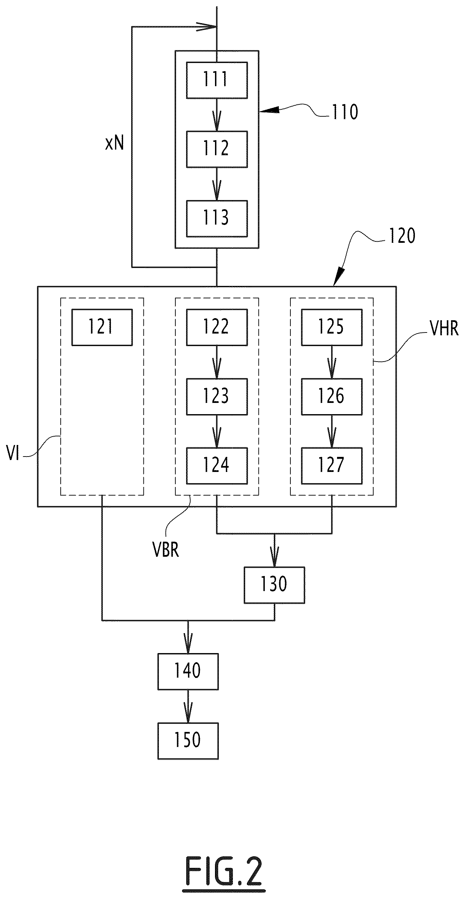

Le procédé de fonctionnement du radar 10 sera désormais expliqué en référence à la figure 2 présentant un organigramme de ses étapes.

Il est considéré que ce procédé est mis en œuvre lors d'un balayage électronique et/ou d'un balayage mécanique (par exemple en azimut et/ou en élévation) de l'espace autour du radar 10, par exemple par la mise en œuvre de formation de faisceaux conventionnelle à l'émission et en réception. En particulier, ce procédé comprend la mise en œuvre itérative au moins de l'étape 110 décrite ci-dessous pour chaque position de pointage du radar 10. Chaque itération de cette étape est appelée récurrence.

Il est considéré en outre que les positions de pointage se succèdent selon un sens de rotation prédéterminé et définissent toutes une ouverture angulaire dépendante de l'angle de dépointage connu de l'homme de l'art. L'ensemble des positions de pointage définissent un cône de visibilité disponible du radar 10. Autrement dit, par « cône de visibilité », on entend l'ensemble des positions de pointage différentes lors d'un tour de balayage effectué par le radar 10.

Chaque récurrence de l'étape 110 comprend une émission/réception de signaux dans la position de pointage correspondante.

En particulier, lors de cette étape, l'unité d'émission 22 du radar 10 émet des signaux ayant une forme d'onde particulière et l'unité de réception 23 reçoit des échos de ces signaux.

Les signaux émis/reçus lors de cette étape sont de type dit onde communalisée.

Chaque onde communalisée comprend au moins deux impulsions consécutives associées aux modes de fonctionnement différents du radar. Ainsi, chaque impulsion définit le premier mode (i.e. mode de détection/identification des cibles maritimes) ou le deuxième mode (i.e. mode d'imagerie). Selon un autre exemple de réalisation, chaque onde communalisée comprend au moins une impulsion dans au moins certaines récurrences de l'étape 110. Dans un tel cas, cette impulsion définit le mode de détection/identification des cibles maritimes.

L'étape 110 d'émission/réception de signaux comprend plusieurs sous-étapes.

Lors de la sous-étape 111, l'unité d'émission 22 génère une séquence d'impulsions consécutives comprenant au moins une première impulsion associée au premier mode et au moins une deuxième impulsion associée au deuxième mode.

Les impulsions sont avantageusement générées à des fréquences d'émission différentes et associés à des directions d'émission différentes.

La direction d'émission est définie par exemple par un couple de valeurs angulaires telles que par exemple l'élévation (ou site) et l'azimut d'émission, dénotées respectivement par El et Az.

Les impulsions générées lors d'une même récurrence de la sous-étape 111 sont générées dans une fenêtre d'émission Te dans laquelle chaque impulsion a une largeur Lli et est espacée de l'autre impulsion et de l'une des frontières de la fenêtre d'émission Te par un écart temporel T_{GAP}. Cet écart temporel T_{GAP} est choisi le plus petit possible en fonction des capacités de l'émetteur.

La largeur Lli de chaque impulsion définit son bilan énergétique. Avantageusement, les impulsions associées à des modes différents définissent des largeurs Lli différentes et les impulsions associées au même mode définissent une même largeur Lli.

Dans le domaine fréquentiel, les impulsions partagent un même support fréquentiel B_{rec}, avec un écart fréquentiel F_{GAP} entre les porteuses Fi correspondante. L'écart fréquentiel F_{GAP} est choisi suffisant pour distinguer à la réception les échos de ces impulsions ainsi que ceux des impulsions émises lors des récurrences suivantes de la sous-étape 111 comme cela sera expliquée par la suite.

Lors de la sous-étape 112 suivante, l'unité d'émission 22 émet dans une fenêtre d'émission Te les impulsions générées lors de la sous-étape précédente, selon les bandes fréquentielles correspondantes.

Lors de la sous-étape 113 suivante, l'unité de réception 23 reçoit des échos correspondant aux impulsions émises dans une fenêtre temporelle commune de réception. La durée Tr de cette fenêtre commune de réception est égale à la durée totale de la récurrence T_{R} (c'est-à-dire le temps d'observation du pointage correspondant pour une récurrence, tel que défini précédemment) moins la durée de la fenêtre d'émission Te. Lors de la réception, les échos correspondant aux impulsions différentes sont distingués par les bandes fréquentielles différentes, en utilisant par exemple des filtres passe-bande autour des fréquences centrales et un filtrage spatial par formation de faisceau conventionnelle en émission et en réception.

Selon certains exemples de réalisation, un filtrage supplémentaire peut être ajouté pour renforcer l'isolation entre modes :
- mode Doppler fonctionnant en « chirp montant » et mode non-Doppler fonctionnant en « chirp descendant » (ou inversement), et/ou
- mode Doppler fonctionnant en polarisation circulaire gauche et mode non-Doppler fonctionnant en polarisation circulaire droite (ou inversement).

Toute combinaison de signature citée ci-dessus, ou leur variante (code de polarisation, etc.) peut être employée en plus de la forme d'onde communalisée citée plus haut.

Selon l'invention, différentes récurrences de l'étape 110 permettent de mettre en œuvre une technique appelée *Step Frequency* en relation avec au moins l'un des modes de fonctionnement du radar 10.

Pour cela, lors de N récurrences de l'étape d'émission/réception 110, au moins Q1 impulsions relatives au premier mode sont émises selon des bandes fréquentielles adjacentes.

Alternativement ou en complément, lors de N récurrences de l'étape d'émission/réception 110, au moins Q2 impulsions relatives au deuxième mode sont émises selon des bandes fréquentielles adjacentes.

En particulier, en fonction de différents modes de réalisation de l'invention, Q1/Q2 impulsions peuvent être émises selon des bandes fréquentielles adjacentes lors d'une même récurrence de l'étape d'émission/réception 110 (i.e. N=1) ou lors de plusieurs récurrences de cette étape (i.e. N>1).

Des bandes fréquentielles adjacentes permettent de former une bande synthétique conformément à la technique *Step Frequency* comme cela sera expliqué plus en détail par la suite.

Dans tout ce qui suit, une bande fréquentielle est définie par une fréquence centrale et une largeur de bande. Avantageusement, dans la suite, toutes les bandes fréquentielles relatives à un même mode de fonctionnement présentent une même largeur.

Par « bandes fréquentielle adjacentes », on entend des bandes fréquentielles dont les fréquences centrales se suivent dans le domaine fréquentiel et dont les largeurs de bande sont choisies de sorte que les bandes soient situées le plus proche possible, sans former des zones de chevauchement.

Le choix des nombres Q1, Q2 et N se fait selon différents modes de réalisation de l'invention qui seront expliqués ci-dessous.

Selon un premier mode réalisation, une impulsion relative à chaque mode est émise à chaque récurrence de l'étape 110 et des impulsions issues des récurrences différentes forment un groupe de Q1 et/ou Q2 impulsions de bandes fréquentielles adjacentes.

Dans un tel cas, le nombre N est supérieur ou égal à 2 et au moins l'un des nombres Q1 et Q2 est supérieur ou égal à 2, et est avantageusement égal à N. Avantageusement, chaque nombre Q1 et Q2 est supérieur ou égal à 2.

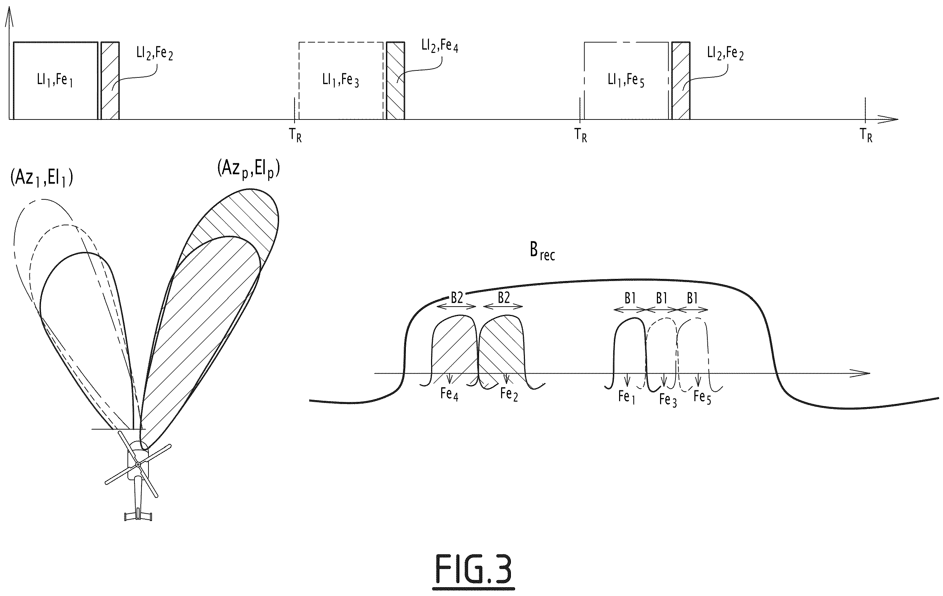

La figure 3 illustre un exemple de réalisation lorsque N=3, Q1=2 et Q2=3.

Selon cet exemple, lors d'une première récurrence de la sous-étape 111, l'unité d'émission 22 génère une première impulsion I₁ liée au premier mode (i.e. mode de détection/identification) et une deuxième impulsion I₂ liée au deuxième mode (i.e. mode d'imagerie).

En outre, l'impulsion I₁ associée au premier mode a une largeur LI₁ et l'impulsion I₂ associée au deuxième mode a une largeur LI₂ qui est plus petite que la largeur LI₁. Ainsi, l'impulsion I₁ associée au premier mode définit un bilan énergétique plus important que l'impulsion I₂ associée au deuxième mode.

Dans le domaine fréquentiel, l'impulsion I₁ associée au premier mode a une fréquence F₁ et l'impulsion I₂ associée au deuxième mode a une fréquence F₂.

Lors d'une deuxième récurrence de la sous-étape 111, la fréquence F₃ de l'impulsion I₁ associée au premier mode est choisie de sorte que la bande fréquentielle correspondant à cette fréquence F₃ soit adjacente à la bande fréquentielle correspondant à la fréquence F₁ de l'impulsion I₁ de la récurrence précédente de la sous-étape 111.

De manière analogue, la fréquence F₄ de l'impulsion I₂ associée au deuxième mode est choisie de sorte que la bande fréquentielle correspondant à cette fréquence F₄ soit adjacente à la bande fréquentielle correspondant à la fréquence F₂ de l'impulsion I₂ de la récurrence précédente de la sous-étape 111.

Lors d'une troisième itération de la sous-étape 111, la fréquences F₅ de l'impulsion I₁ associée au premier mode est choisie de sorte que la bande fréquentielle correspondant à cette fréquence F₅ soit adjacente à la bande fréquentielle correspondant à la fréquence F₃ de l'impulsion I₁ de la récurrence précédente de la sous-étape 111.

En revanche, la même fréquence F₂ que lors de la première récurrence de la sous-étape 111 est associée au deuxième mode.

Ainsi, comme cela est illustré sur la figure 3, le support fréquentiel B_{rec} est adapté pour contenir d'une part les bandes fréquentielles adjacentes des fréquences F₂ et F₄, et d'autre part les bandes fréquentielles adjacentes des fréquences F₁, F₃ et F₅ tout en gardant l'écart fréquentiel F_{GAP} entre ces deux groupes des bandes fréquentielles adjacentes.

Selon l'exemple de la figure 3, le premier mode (i.e. mode de détection/identification) fonctionne sur 3 récurrences pour la mise en œuvre de la technique *Step Frequency* et un premier niveau de post-intégration, les bandes émises étant adjacentes. Ce motif se répète pour une même direction d'émission si besoin de post-intégration supplémentaire avec un saut de fréquence suffisant, puis change de direction d'émission.

Le deuxième mode (i.e. mode d'imagerie) quant à lui fonctionne sur 2 récurrences pour la mise en œuvre de la technique *Step Frequency.* Ce motif se répète dans la même direction d'émission pendant tout le temps d'intégration cohérent nécessaire pour réaliser l'imagerie ISAR, soit P répétitions, donnant un temps d'intégration total pour l'imagerie de 2 * P * Tr.

Selon un deuxième mode réalisation, un groupe de Q2 impulsions de bandes fréquentielles adjacentes relatives au mode Doppler est émis à chaque récurrence de l'étape 110. En outre, une impulsion relative au mode non-Doppler est émise à chaque récurrence de l'étape 110 et Q1 impulsions issues des récurrences différentes de cette étape 110 forment un groupe de Q1 impulsions de bandes fréquentielles adjacentes.

Dans un tel cas, le nombre N est supérieur ou égal à 2 et chacun des nombres Q1 et Q2 est supérieur ou égal à 2. En outre, le nombre Q1 est égal à N.

Par ailleurs, sans perte de généralité, il sera considéré ci-dessous que le mode non-Doppler est le premier mode (i.e. mode de détection/identification) et que le mode Doppler est le deuxième mode (i.e. mode d'imagerie). Toutefois, une situation inverse reste également possible.

Ainsi, selon ce mode de réalisation, une partie du support fréquentiel B_{rec} est dédiée au mode Doppler et l'autre partie de ce support est dédiée au mode non-Doppler.

En outre, chaque récurrence possède Q2 impulsions de même largeur LI_{d} du mode Doppler et une impulsion pour le mode non-Doppler de largeur LI_{nd}.

Les Q2 bandes fréquentielles de même largeur B_{d} du mode Doppler sont adjacentes pour effectuer la technique *Step Frequency* de la voie Doppler et elles sont maintenues sur P récurrences pour effectuer le traitement Doppler.

Les Q1 bandes fréquentielles de même largeur B_{nd} du mode non-Doppler sont réparties sur N récurrences, elles sont adjacentes pour effectuer la technique *Step Frequency* de la voie non-Doppler.

Le nombre de post-intégration du mode non-Doppler pouvant être supérieure à N, un saut de fréquence centrale peut être réalisée à partir de la récurrence N+1 afin de profiter correctement du gain de post-intégration.

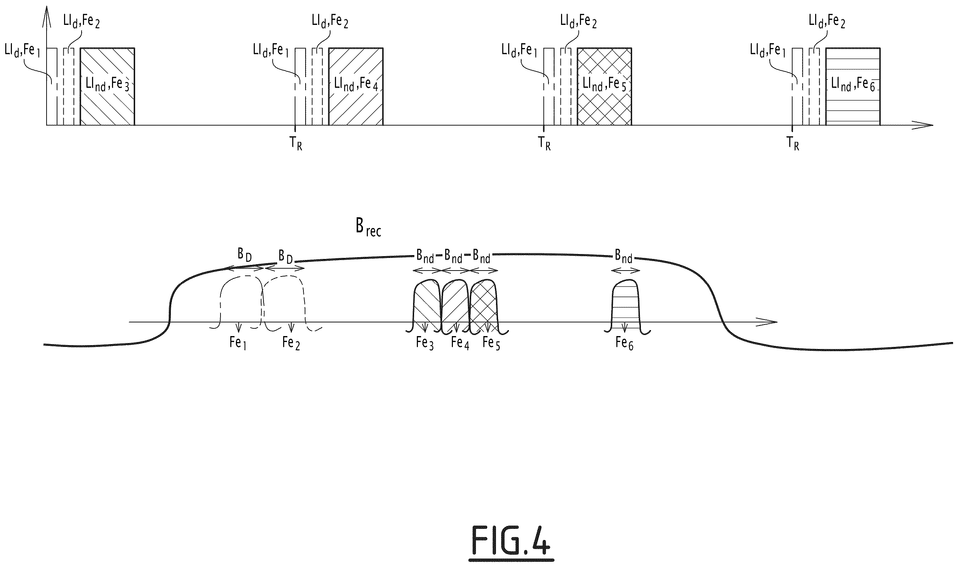

La figure 4 illustre un exemple de réalisation lorsque N=3, Q1=3 et Q2=2.

Selon cet exemple, lors d'une première récurrence de la sous-étape 111, l'unité d'émission 22 génère une première impulsion I₁ et une deuxième impulsion I₂ liées au mode Doppler et une troisième impulsion I₃ liée au mode non-Doppler.

En outre, chacune des impulsions I₁ et I₂ associées au mode Doppler a une largeur LI_{d} et l'impulsion I₃ associée au mode non-Doppler a une largeur LI_{nd} qui est plus grande que la largeur LI_{d}.

Dans le domaine fréquentiel, les impulsions I₁ et I₂ associées au mode Doppler ont respectivement une fréquence F₁ et une fréquence F₂ de sorte que les bandes fréquentielles correspondantes soient adjacentes. L'impulsion I₃ associée au mode non-Doppler a une fréquence F₃ choisie de sorte à former au moins un écart fréquentielle F_{GAP} de chacune des bandes fréquentielles associées aux fréquences F₁ et F₂.

Lors d'une deuxième récurrence de la sous-étape 111, les impulsions I₁ et I₂ associées au mode Doppler sont générées avec les mêmes fréquences F₁ et F₂ alors que l'impulsion I₃ associée au mode non-Doppler a une fréquence F₄ choisie de sorte à ce que la bande fréquentielle correspondante soit adjacente à celle formée par la fréquence F₃ lors la récurrence précédente.

De manière analogue, lors d'une troisième récurrence de la sous-étape 111, les impulsions I₁ et I₂ associées au mode Doppler sont générées avec les mêmes fréquences F₁ et F₂ alors que l'impulsion I₃ associée au mode non-Doppler a une fréquence F₅ choisie de sorte à ce que la bande fréquentielle correspondante soit adjacente à celle formée par la fréquence F₄ lors la récurrence précédente.

Ensuite, lors d'une quatrième récurrence de la sous-étape 111, les impulsions I₁ et I₂ associées au premier mode sont toujours générées avec les mêmes fréquences F₁ et F₂ alors que l'impulsion I₃ associée au deuxième mode a une fréquence F₆ choisie de sorte à former un saut fréquentiel dans le même support fréquentiel B_{rec}.

Selon un troisième mode réalisation présentant un cas inverse du deuxième mode de réalisation, un groupe de Q1 impulsions de bandes fréquentielles adjacentes relatives au mode non-Doppler est émis à chaque récurrence de l'étape 110. En outre, une impulsion relative au mode Doppler est émise à chaque récurrence de l'étape 110 et Q2 impulsions issues des récurrences différentes de cette étape 110 forment un groupe de Q2 impulsions de bandes fréquentielles adjacentes.

Dans un tel cas, le nombre N est supérieur ou égal à 2 et chacun des nombres Q1 et Q2 est supérieur ou égal à 2. En outre, le nombre Q2 est égal à N.

Par ailleurs, comme dans le cas précédent et sans perte de généralité, il sera considéré ci-dessous que le mode non-Doppler est le premier mode (i.e. mode de détection/identification) et que le mode Doppler est le deuxième mode (i.e. mode d'imagerie). Toutefois, une situation inverse reste également possible.

Ainsi, comme dans le cas précédent, selon ce mode de réalisation, une partie du support fréquentiel B_{rec} est dédiée au mode Doppler et l'autre partie de ce support est dédiée au mode non-Doppler.

En outre, chaque récurrence possède Q1 impulsions de même largeur LI_{nd} du mode non-Doppler et une impulsion pour le mode Doppler de largeur LI_{d}.

Les Q1 bandes fréquentielles de même largeur B_{nd} du mode non-Doppler sont adjacentes pour effectuer la technique *Step Frequency* de la voie non-Doppler à chaque récurrence.

Les Q2 impulsions de même largeur B_{d} du mode Doppler sont réparties sur les N récurrences, elles sont adjacentes pour effectuer la technique *Step Frequency* de la voie Doppler, et ce motif est répété P fois pour réaliser le traitement Doppler.

Le nombre de post-intégration du mode non-Doppler pouvant être supérieur à N, un saut de fréquence centrale peut être réalisé à chaque récurrence afin de profiter pleinement du gain de post-intégration. À ce titre, la bande de réception globale peut rester la même si elle est suffisamment grande, ou elle peut glisser en fréquence (en gardant le support du mode Doppler) pour aller chercher d'autres fréquences pour le mode non-Doppler.

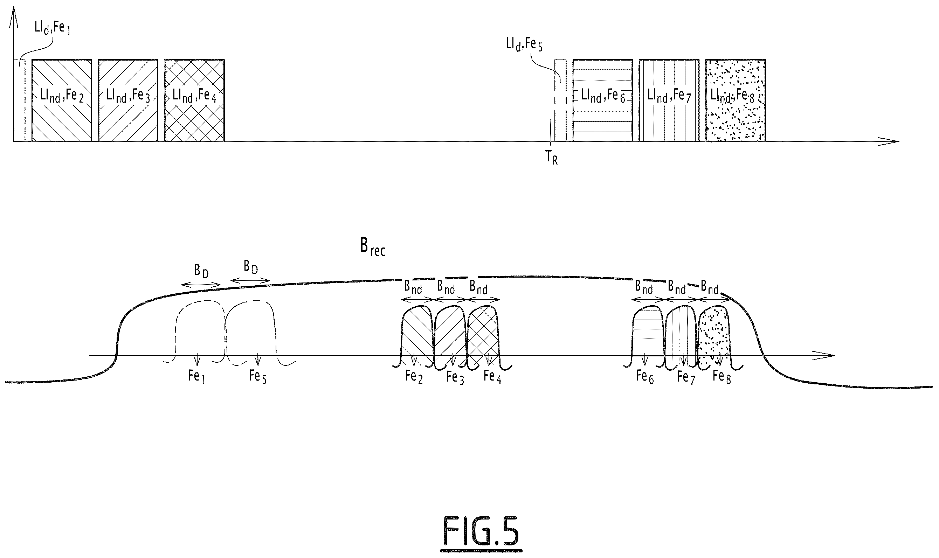

La figure 5 illustre un exemple du troisième mode de réalisation lorsque N=2, Q2=2 et Q1=3.

Selon cet exemple, lors d'une première récurrence de la sous-étape 111, l'unité d'émission 22 génère une première impulsion I₁ liée au mode Doppler et trois autres impulsions I₂ à I₄ liées au mode non-Doppler.

En outre, l'impulsion I₁ associée au mode Doppler a une largeur LI_{d} et les impulsions I₂ à I₄ associées au mode non-Doppler ont une largeur LI_{nd} qui est plus grande que la largeur LI_{d}.

Dans le domaine fréquentiel, l'impulsion I₁ associée au mode Doppler a une fréquence F₁. Les impulsions I₂ à I₄ associées au mode non-Doppler ont respectivement des fréquences F₂ à F₄ choisies de sorte à ce que les bandes fréquentielles correspondantes soient adjacentes.

Lors d'une deuxième récurrence de la sous-étape 111, l'impulsion I₁ associée au mode Doppler a une fréquence F₅ choisie de sorte à ce que la bande fréquentielle correspondante soit adjacente à la bande fréquentielle formée par la fréquence F₁ lors de la récurrence précédente de la sous-étape 111. Les impulsions I₂ à I₄ associées au mode non-Doppler ont les mêmes fréquences F₂ à F₄ que lors de l'itération précédente pour former un saut de fréquence.

D'autres modes de réalisation sont également possibles.

Par exemple, un quatrième mode de réalisation peut correspondre à une combinaison du deuxième et du troisième mode de réalisation.

Il est à noter en outre que dans l'ensemble des modes de réalisation 2 à 4, les directions d'émission peuvent être choisies de sorte que :
- le mode Doppler pointe dans la même direction pour effectuer son traitement Doppler sur P valeurs cohérentes ;
- le mode non-Doppler change de direction d'azimut pointé à chaque fois que le nombre de post-intégration *Nₚᵢ* nécessaire est atteint.

Lors de l'étape 120, l'unité de réception 23 met en œuvre une étape de prétraitement 120 des échos reçus.

Cette étape de prétraitement 120 comprend plusieurs voies de traitement choisies en fonction du mode de fonctionnement du radar 10 et/ou de la résolution voulue de l'image résultante.

En particulier, l'étape de prétraitement 120 comprend une voie de traitement à basse résolution VBR, une voie de traitement à haute résolution VHR et une voie d'imagerie VI. D'autres voies de traitement ayant un rôle intermédiaire entre la voie de traitement à basse résolution et la voie de traitement à haute résolution peuvent également être utilisées.

Dans l'ensemble des modes de réalisation, la voie d'imagerie est dédiée au mode d'imagerie.

La voie d'imagerie comprend notamment une sous-étape 121 lors de laquelle l'unité de réception 23 effectue des traitements d'imagerie connus en soi. Ces traitements comprennent par exemple au moins un élément choisi dans la liste comprenant :
- compression d'impulsion (avec la technique *Step Frequency* si besoin pour améliorer la résolution distance) ;
- traitement Doppler haute résolution (intégration longue) par FFT (de l'anglais *« Fast Fourier Transform* ») ou autre traitement d'analyse spectrale hyper résolvant (MUSIC, ESPRIT, etc.).

Le traitement Doppler peut être réalisé sur :
- toute l'acquisition pour former une unique image ;
- plusieurs sous-séquences (découpe temporelle de l'acquisition) pour produire plusieurs imagettes ;
- à iso-résolution Doppler (même temps d'intégration) ;
- plusieurs résolutions Doppler (temps d'intégration variant, i.e. nb de récurrences différents).

Lorsque plusieurs imagettes ISAR sont calculés en parallèle, un algorithme choisit la meilleure image (ou succession d'images) à présenter à l'opérateur, suivant des critères morphologiques.

L'objectif de cette découpe temporelle est de pouvoir « capter » l'effet ISAR (mouvement intrinsèque du bateau lié au passage des vagues) et uniquement celui-ci (éviter d'intégrer les moments où le bateau ne « bouge » pas) pour produire la « plus belle image sur l'axe Doppler ».

Avantageusement, les traitements effectués par la voie d'imagerie sont mis en œuvre à chaque récurrence de l'étape d'émission/réception 110, notamment en ce qui concerne la partie distance. En ce que concerne la partie Doppler, il peut être nécessaire d'attendre toutes les récurrences nécessaires de cette étape 110.

La voie de traitement à basse résolution permet d'obtenir une image à basse résolution et comprend une sous-étape de compression d'impulsions 122, une sous-étape de post-intégration 123 et une sous-étape de traitement 124.

Avantageusement, ces sous-étapes sont mises en œuvre par la voie de traitement de basse résolution à chaque récurrence de l'étape d'émission/réception 110.

Lors de la sous-étape de compression 122, l'unité de réception 23 effectue une compression d'impulsions classique sur le signal de chaque bande fréquentielle prise indépendamment.

Puis, de la sous-étape 123, l'unité de réception 23 effectue une recombinaison des signaux de chaque bande fréquentielle par post-intégration.

Lors de la sous-étape 124 suivante, l'unité de réception 23 effectue un traitement de basse résolution qui est choisi en fonction de différents modes de réalisation de l'invention comme cela sera expliqué plus en détail par la suite.

La voie de traitement à haute résolution permet d'obtenir une image résultante à haute définition et comprend une sous-étape de compression 125, une sous-étape de reconstitution 126, et une sous-étape de traitement 127.

Avantageusement, ces sous-étapes sont mises en œuvre par la voie de traitement à haute résolution après N récurrences de l'étape d'émission/réception 110.

Lors de la sous-étape 125, le module de réception 23 effectue une compression des impulsions (i.e. échos) de chaque bande fréquentielle.

En particulier, lors de cette sous-étape 125, l'unité de réception 23 applique un filtre de Wiener aux échos correspondants. Comme cela est connu en soi, la sortie d'un tel filtre présente une forme sensiblement rectangulaire ce qui permet de reconstituer une bande synthétique par la suite.

Lors de la sous-étape 126, l'unité de réception 23 reconstitue au moins une bande synthétique à partir des échos correspondant au même mode de fonctionnement.

En particulier, lorsque Q1 impulsions ont été émises lors de l'étape 110 selon des bandes fréquentielles adjacentes, l'unité de réception 23 reconstitue une première bande synthétique de largeur Q1*B₁ où B₁ est la largeur des impulsions correspondantes.

Lorsque Q2 impulsions ont été émises lors de l'étape 110 selon des bandes fréquentielles adjacentes, l'unité de réception 23 reconstitue une deuxième bande synthétique de largeur Q2*B₁ où B₂ est la largeur des impulsions correspondantes.

Lors de la sous-étape 127, le module de réception 23 effectue un traitement de haute résolution qui est choisi en fonction de différents modes de réalisation de l'invention qui seront expliqués plus en détail ci-dessous.

En particulier, selon un cinquième mode de réalisation, chacun des traitements de basse résolution et de haute résolution comprend une fonction de détection réalisée par exemple par la technique TFAC (« taux de fausse alarme constant ») avec des seuils adaptés aux différents résolutions de signal.

Selon ce même mode de réalisation, chacun des traitements de basse résolution et de haute résolution comprend en outre une fonction d'identification.

Ce mode de réalisation comprend donc la mise en œuvre simultanée des fonctions de détection et d'identification sur chacune des voies de traitement à basse et à haute résolution et permet d'améliorer à la fois ces deux fonctions.

Selon un sixième mode de réalisation, le traitement de haute résolution comprend uniquement la fonction d'identification et le traitement de basse résolution comprend uniquement la fonction de détection.

Ainsi, la résolution de l'image obtenue par la fonction d'identification peut être supérieure à celle de l'image obtenue par la fonction de détection.

D'autres mode de réalisation restent également possibles.

Par exemple, selon un septième mode de réalisation, plus que deux voies sont appliquées pour traitement des échos relatifs au mode de détection/identification. Dans un tel cas, la fonction de détection peut être réalisée sur plusieurs voies et la fonction d'identification peut être réalisée sur une seule voie, ou inversement la fonction de détection peut être réalisée sur une seule voie et la fonction d'identification peut être réalisée sur plusieurs voies.

Il est à noter par ailleurs que chacun des modes de réalisation 5 à 7 reste compatible avec chacun des modes de réalisation 1 à 4.

Lors de l'étape 130 suivante, le module de réception 23 effectue une combinaison de différents traitements effectués par les différentes voies de traitement et notamment par la voie de traitement à haute résolution et la voie de traitement à basse résolution.

Cette combinaison peut être effectuée de différentes manières et dépend notamment de chacun des modes de réalisation 5 à 7.

Cette combinaison permet de générer notamment une image à basse résolution et une image à haute résolution qui sont ensuite traitées par un traitement d'identification double image.

Lors de l'étape 140 suivante, le module de réception 23 met en œuvre une technique pistage de cibles, en combinant les résultats issus de l'ensemble des voies de traitement. Cette technique de pistage peut être connue en soi.

Lors de l'étape 150 suivante, le module de réception 23 transmet la ou chaque piste détectée à tout système intéressé. Un tel système intéressé peut être le radar 10 lui-même qui peut mettre une telle piste dans son ordonnanceur.

## Revendications

1. Procédé de fonctionnement d'un radar (10) de détection de cibles suivant un premier mode et un deuxième mode, le procédé comprenant la mise en œuvre de plusieurs récurrences d'une étape (110) d'émission/réception de signaux, chaque récurrence de ladite étape (110) comprenant les sous-étapes suivantes :
- génération (111) d'une séquence d'impulsions consécutives comprenant au moins une impulsion associée au premier mode et au moins une impulsion associée au deuxième mode ;
- émission (112) des impulsions dans des bandes fréquentielles différentes ;
- réception (113) dans une fenêtre temporelle commune des échos des impulsions ;
lors de N récurrences de l'étape d'émission/réception (110), au moins Q1 impulsions relatives au premier mode étant émises selon des bandes fréquentielles adjacentes, le nombre Q1 étant supérieur ou égal à 2, le nombre N étant supérieur ou égal à 1 ;
le procédé comprenant en outre une étape (120) de prétraitement des échos reçus, comprenant les sous-étapes suivantes, mises en œuvre après les N récurrences de l'étape d'émission/réception :
- compression (125) de Q1 échos correspondant aux Q1 impulsions émises selon lesdites bandes fréquentielles adjacentes ;
- reconstruction (126) d'une première bande synthétique à partir desdits Q1 échos comprimés ;
dans lequel lors de N récurrences de l'étape d'émission/réception (110), Q2 impulsions relatives au deuxième mode sont émises selon des bandes fréquentielles adjacentes, le nombre Q2 étant supérieur ou égal à 2 ;
la sous-étape (125) de compression comprenant en outre une compression de Q2 échos correspondant aux Q2 impulsions émises selon lesdites bandes fréquentielles adjacentes ;
la sous-étape (126) de reconstruction comprenant en outre une reconstruction d'une deuxième bande synthétique à partir desdits Q2 échos comprimés.

2. Procédé selon la revendication 1, dans lequel le nombre N est égal à Q1 et dans lequel la séquence d'impulsions consécutives générée lors de chaque récurrence de l'étape d'émission/réception (110) comprend une seule impulsion associée au premier mode et une seule impulsion associée au deuxième mode.

3. Procédé selon la revendication 1, dans lequel la séquence d'impulsions consécutives générée lors de chaque récurrence de l'étape d'émission/réception (110) comprend une seule impulsion associée au premier mode et plusieurs impulsions associées au deuxième mode.

4. Procédé selon la revendication 1, dans lequel la séquence d'impulsions consécutives générée lors de chaque récurrence de l'étape d'émission/réception comprend au moins deux impulsions associées au premier mode et au moins deux impulsions associées au deuxième mode.

5. Procédé selon l'une quelconque des revendications précédentes, dans lequel les impulsions associées à un même mode ont une même largeur fréquentielle ;
les impulsions associées au premier mode ayant une largeur fréquentielle B1 ;
de préférence, la largeur de la première bande synthétique étant égale à Q1xB1.

6. Procédé selon l'une quelconque des revendications précédentes, dans lequel la sous-étape (125) de compression de Q1 échos comprend l'application d'un filtre de Wiener.

7. Procédé selon l'une quelconque des revendications précédentes, dans lequel l'un des modes est un mode Doppler et l'autre mode est un mode non-Doppler.

8. Procédé selon l'une quelconque des revendications précédentes, dans lequel l'un des modes est un mode d'imagerie et l'autre mode est un mode de détection/identification de cibles maritimes.

9. Procédé selon l'une quelconque des revendications précédentes, dans lequel l'étape de prétraitement (120) définit au moins une voie de traitement séparée pour chaque mode.

10. Procédé selon la revendication 8 ou la revendication 9 prise en combinaison avec la revendication 8, dans lequel l'étape de prétraitement (120) définit pour le mode de détection/identification une voie de traitement à basse résolution et une voie de traitement à haute résolution.

11. Procédé selon la revendication 10, dans lequel la sous-étape de reconstruction (125) de la première bande synthétique est mise en œuvre dans la voie de traitement à haute résolution.

12. Procédé selon la revendication 10 ou 11, dans lequel l'étape de prétraitement (120) comprend en outre une sous-étape d'application d'une fonction de détection et une sous-étape d'application d'une fonction d'identification ;
la fonction d'identification étant mise en œuvre dans la voie de traitement à haute résolution, de préférence uniquement dans la voie de traitement à haute résolution ;
la fonction de détection étant mise en œuvre dans la voie de traitement à basse résolution, de préférence uniquement dans la voie de traitement à basse résolution.

13. Procédé selon l'une quelconques des revendications 10 à 12, comprenant en outre une étape (130) de combinaison de détections issues des différentes voies de traitement.

14. Procédé selon l'une quelconque des revendications précédentes, dans lequel l'étape de prétraitement (120) comprend en outre une sous-étape (123) de post-intégration de chaque écho reçu, ladite sous-étape (123) étant mise en œuvre dans la voie de traitement à basse résolution.

15. Radar de détection de cibles (10) comprenant des moyens techniques (21, 22, 23) configurés pour mettre en œuvre le procédé selon l'une quelconque des revendications précédentes.
